# EUROPÄISCHE PATENTANMELDUNG

(11) **EP 2 492 822 A1**
(43) Veröffentlichungstag der Anmeldung: **29.08.2012**
(21) Anmeldenummer: 12156184.9
(22) Anmeldetag: 20.02.2012
(51) Int. Cl.: G06F 13/16

(54) **Speicherverwaltungseinheit und Verfahren zum Verwalten von Speicherzugriffen sowie System mit einer Speicherverwaltungseinheit**

(30) Priorität: 22.02.2011 DE 102011011958
(71) Anmelder: ATLAS Elektronik GmbH, 28309 Bremen (DE)
(72) Erfinder: Bade, Jörg, 27572 Bremerhaven (DE)
(74) Vertreter: Wasiljeff, Johannes M.B.

(57) **Zusammenfassung**

Die Erfindung betrifft eine Speicherverwaltungseinheit 30 und ein Verfahren zum Verwalten von Speicherzugriffen mit einer Speicherverwaltungseinheit 30 sowie ein System mit der Speicherverwaltungseinheit 30, einem Prozessor 14 und mehreren Speichern 12. Im Falle eines Schreib- oder Lesezugriffs werden dazu mit einer Systemdatenbusschnittstelle 34 zu schreibende Datenwörter 23 eingelesen oder zu lesende Datenwörter 23 ausgegeben. Ein Datenwort 23 weist dabei ein oder mehrere Teildatenwörter 54 mit einem Dateninhalt 57 auf. Ferner weist jedes Teildatenwort 54 eine Bitbreite auf, die der kleinsten mit einer über eine Systemadressbusschnittstelle 32 adressierbaren Einheit von Bits, z.B. einem Byte entspricht. Im Falle eines Schreibzugriffs wird in einem Verarbeitungszyklus ein zu schreibenden Datenworts 23 mit mehr als einem Teildatenwort 54 in seine einzelnen Teildatenwörter 54 aufgeteilt und jedes Teildatenworts 54 jeweils an einer anderen Speichermoduldatenbusschnittstelle und ein zu schreibenden Datenworts 23 mit einem Teildatenwort 54 an einer Speichermoduldatenbusschnittstelle 42 ausgegeben. Ferner wird in einem Verarbeitungszyklus im Falle eines Lesezugriffs ein zu lesendes Datenwort (23), das mehr als ein Teildatenwort 54 aufweist, aus seinen einzelnen Teildatenwörter 54 zusammengesetzt, wobei jedes Teildatenwort 54 von einer anderen Speichermoduldatenbusschnittstelle 42 eingelesen wird, und ein zu lesendes Datenwort 23, das ein Teildatenwort aufweist, wird von einer Speichermoduldatenbusschnittstelle 42 eingelesen.

## Beschreibung

Die Erfindung betrifft eine Speicherverwaltungseinheit nach dem Oberbegriff von Anspruch 1 sowie ein Verfahren zum Verwalten von Speicherzugriffen nach dem Oberbegriff von Anspruch 7 sowie ein System mit einer Speicherverwaltungseinheit nach dem Oberbegriff von Anspruch 13.

Es sind Systeme bzw. Prozessorsysteme, z.B. Mikrocontroller oder FPGAs, bekannt, bei denen ein Prozessor und verschiedene Arbeits-, Daten- und Programmspeicher über Busleitungen miteinander verbunden sind. Ferner können zu einem derartigen System weitere Peripheriefunktionen, wie z.B. Kommunikationsschnittstellen oder programmierbare digitale und/oder analoge Funktionsblöcke, gehören, die ebenfalls über Busleitungen untereinander und mit den anderen Komponenten verbunden sind.

Bei derartigen Systemen greifen die Peripheriefunktionen sowie der Prozessor in zeitlichen Abständen auf die verschiedenen Speicher zu, um dort Datenwörter mit Dateninhalten mit Schreibzugriffen in einem der Speicher abzuspeichern oder mit Lesezugriffen aus einem der Speicher auszulesen. Gerade im Bereich der Datenkommunikation wird über Kommunikationsschnittstellen des Systems eine Vielzahl von Datenwörtern empfangen und z.B. vor der weiteren Verarbeitung in einem Speicher zwischengespeichert. Ein Datenwort entspricht dabei einer Einheit von Bits, die mit einem Lesezugriff oder einem Schreibzugriff vom System in einem Speicher abgespeichert oder aus diesem gelesen werden soll. Dazu wird ein Datenwort im Falle eines Schreibzugriffs dem Speicher vom System oder im Falle eines Lesezugriffs dem System vom Speicher als Einheit übergeben.

Es sind Speicherverwaltungseinheiten bekannt, die ein zu speicherndes oder zu lesendes Datenwort eindeutig an einer Speicheradresse in genau einem bestimmten der Speicher des Systems speichern bzw. aus dieser Speicheradresse eines Speichers lesen. Dazu wertet eine derartige Speicherverwaltungseinheit Adressen auf einem Systemadressbus aus und ordnet diese eindeutig einem Speicher sowie genau einer definierten Speicheradresse innerhalb des Speichers zu.

Hierbei wird typischerweise eine byteweise Speicheradressierung gewählt, wobei auf eine Anzahl von aufeinanderfolgenden Bytes in einem Verarbeitungszyklus, z.B. in einem Takt, mit einer Speicheradresse zugegriffen werden kann. Diese Anzahl von aufeinanderfolgenden Bytes entspricht maximal der Datenbusbreite in Bytes. Es ist hierbei nur möglich, auf die maximale Anzahl von Bytes in einem Verarbeitungszyklus zuzugreifen, wenn bestimmte "gerade" Speicheradressen beim Speicherzugriff mit dem Systemadressbus adressiert werden. Wird ein Speicherzugriff auf eine Speicherdresse durchgeführt, die nicht einer "geraden" Adresse entspricht, so benötigt man zwei Verarbeitungszyklen, um ein Datenwort der maximalen Anzahl von Bytes aus dem Speicher zu lesen oder in den Speicher zu schreiben.

Ist mit den o.g. Systemen ein kontinuierlicher Datenstrom aus direkt aufeinanderfolgenden Datenwörtern z.B. abzuspeichern, der dem System z.B. über eine Kommunikationsschnittstelle zugeführt wird, so kann dies dazu führen, dass für jeden Speicherzugriff zwei Verarbeitungszyklen notwendig sind. Dies kann der Fall sein, wenn die Datenwörter des Datenstroms nicht immer der vollen Datenbusbreite entsprechen und der Speicher trotzdem optimal genutzt werden soll. In diesem Fall wird nämlich jedes Byte des Datenstroms in den Speicher in aufeinanderfolgende Speicheradressen geschrieben. Dabei wird jedes Datenwort der vollen Datenbusbreite, das auf ein Datenwort folgt, das nicht der vollen Datenbusbreite entspricht und auf eine "gerade" Speicheradresse geschrieben wurde, auf eine Speicheradresse geschrieben, die nicht einer "geraden" Speicheradresse entspricht. Im schlechtesten Falle würde sich die Verarbeitungsgeschwindigkeit im Wesentlichen um 50 % reduzieren.

Der vorliegenden Erfindung liegt daher das technische Problem zugrunde, unabhängig von der Speicheradresse und der Bitbreite bzw. Bytebreite eines zu schreibenden oder zu lesenden Datenwortes (d.h. der Breite eines derartigen Datenwortes in Bits oder Bytes), ein Datenwort in einem Verarbeitungszyklus abzuspeichern bzw. auszulesen und dabei trotzdem eine optimale Speicherauslastung zu erzielen.

Die Erfindung löst dieses Problem durch die Merkmale einer Speicherverwaltungseinheit gemäß Anspruch 1 sowie eines Verfahrens zum Verwalten von Speicherzugriffen gemäß Anspruch 7 sowie ein System mit einer Speicherverwaltungseinheit gemäß Anspruch 13.

Die erfindungsgemäße Speicherverwaltungseinheit sowie das erfindungsgemäße Verfahren und das erfindungsgemäße System sind dazu derart ausgelegt, um jedes Datenwort einer beliebigen Bitbreite auf einer beliebigen Speicheradresse in einem Verarbeitungszyklus abzuspeichern bzw. von einer beliebigen Speicheradresse in einem Verarbeitungszyklus zu lesen und dabei trotzdem eine optimale Speicherauslastung zu erzielen.

Dazu betrifft die Erfindung eine Speicherverwaltungseinheit mit einer Systembusschnittstelle und einer festgelegten Anzahl von Speichermodulschnittstellen. Die Speicherverwaltungseinheit kann Bestandteil eines Systems, z.B. eines Mikrocontrollers oder eines FPGAs sein, wobei die Systembusschnittstelle die Schnittstelle der Speicherverwaltungseinheit zu den Systembussen darstellt. Dazu weist die Systembusschnittstelle mindestens eine Systemdatenbusschnittstelle, eine Systemadressbusschnittelle sowie eine Systemsteuerbusschnittstelle auf, wobei diesen Schnittstellen jeweils die entsprechenden Schnittstellen des Systems zugeführt werden können. Jede der Speichermodulschnittstellen der Speicherverwaltungseinheit weist mindestens eine Speichermoduldatenbusschnittstelle und eine Speichermoduladressbusschnittstelle auf. An jede der Speichermodulschnittstellen kann daher ein Speichermodul angeschlossen werden.

Die Speicherverwaltungseinheit ist derart ausgebildet, um im Falle eines Speicherzugriffs, der z.B. ein Schreibzugriff oder ein Lesezugriff eines Systems über die Systemdatenbusschnittstelle sein kann, im Falle eines Schreibzugriffs ein oder mehrere zu schreibende Datenwörter von der Systemdatenbusschnittstelle einzulesen oder im Falle eines Lesezugriffs ein oder mehrere zu lesende Datenwörter an der Systemdatenbusschnittstelle auszugeben. Ein Datenwort entspricht auch im Zusammenhang mit der Erfindung, entsprechend den obigen Erläuterungen zum Stand der Technik, einer Einheit von Bits, die mit einem Lesezugriff oder einem Schreibzugriff vom System in einem Speicher abgespeichert oder aus diesem gelesen werden soll. Dazu wird ein Datenwort im Falle eines Schreibzugriffs dem Speicher vom System oder im Falle eines Lesezugriffs dem System vom Speicher als Einheit übergeben. Hierbei weist ein Datenwort jeweils ein oder mehrere Teildatenwörter auf. Das oder jedes der Teildatenwörter weist jeweils einen Dateninhalt, z.B. einer Bitfolge von Bits auf. Die Anzahl des oder der Teildatenwörter eines Datenwortes wird hierbei durch ein oder mehrere über die Systemsteuerbusschnittstelle zugeführte Steuersignale vorgegeben.

Im Falle eines Schreib- oder Lesezugriffs wird der Speicherverwaltungseinheit also über die Steuersignale der Systemsteuerbusschnittstelle eine Information zugeführt, die der Speicherverwaltungseinheit darüber Auskunft erteilt, aus wie vielen Teildatenwörtern, das zu schreibende bzw. das zu lesende Datenwort besteht bzw. wie viele Teildatenworte das Datenwort aufweist.

Jedes Teildatenwort weist dazu jeweils eine Bitbreite auf, die der kleinsten mit der Systemadressbusschnittstelle adressierbaren Einheit von Bits entspricht. Diese kleinste Einheit von Bits, z.B. ein Byte, ist somit über eine Speicheradresse, die über die Systemadressbusschnittstelle zugeführt wird, adressierbar und entspricht der kleinsten Einheit, die ein zu schreibendes Datenwort oder ein zu lesendes Datenwort enthalten kann. Diese kleinste Einheit entspricht hier also der Bitbreite eines Teildatenwortes.

Ferner weist die Speicherverwaltungseinheit eine Anzahl von Speichermodulschnittstellen auf, die mindestens der maximalen Anzahl von Teildatenwörtern eines Datenwortes entspricht. Zudem ist die Speicherverwaltungseinheit derart ausgebildet, um im Falle eines Schreibzugriffs ein zu schreibendes Datenwort, das mehr als ein Teildatenwort aufweist, in seiner einzelnen Teildatenwörter aufzuteilen und jedes Teildatenwortes jeweils an einer anderen der Speichermoduldatenbusschnittstellen im Wesentlichen gleichzeitig, in einem Verarbeitungszyklus auszugeben. Ein Verarbeitungszyklus kann z.B. die Periode eines Taktes sein und ist vergleichbar mit einem Verarbeitungszyklus, mit dem bei herkömmlichen Systemen ein Teildatenwort geschrieben wird.

Vorteil der Speicherverwaltungseinheit ist, dass jedes beliebige Datenwort, also auch Datenwörter mit mehr als einem Teildatenwort unabhängig von der Speicheradresse des Datenworts in einem Verarbeitungszyklus einem Speichermodul übergeben werden können und somit in einem Verarbeitungszyklus abgespeichert werden. D.h. im nächsten Verarbeitungszyklus kann bereits ein neues Datenwort bestehend aus einem oder mehreren Teildatenwörtern wiederum unabhängig von der Speicheradresse des Datenworts geschrieben werden.

Ferner ist die Speicherverwaltungseinheit derart ausgebildet, um im Falle eines Lesezugriffs ein zu lesendes Datenwort, das mehr als ein Teildatenwort aufweist in einem Verarbeitungszyklus zu lesen. Dazu wird jedes der Teildatenwörter eines Datenwortes von einer anderen der Speichermoduldatenbusschnittstelle in einem Verarbeitungszyklus eingelesen und das Datenwort aus seinen einzelnen Teildatenwörtern zusammengesetzt.

Das Einlesen der Dateninhalte jedes der Teildatenwörter eines zu lesenden Datenwortes über separate Speichermoduldatenbusschnittstellen ist vorteilhaft, da somit das Datenwort unabhängig von der Anzahl der Teildatenwörter und der Adressierung des zu lesenden Datenwortes in einem Verarbeitungszyklus an das System übergeben werden kann.

Gemäß einer weiteren vorteilhaften Weiterbildung der Vorrichtung ist die Speicherverwaltungseinheit derart ausgebildet, um jeder Speichermodulschnittstelle einen festen bzw. eindeutigen Speichermodulindex zu zuordnen. Hierbei wird einer der Speichermodulschnittstellen ein kleinster Speichermodulindex mit einer kleinsten Zahl bzw. einem kleinsten Nummernwert zugeordnet. Den weiteren Speichermodulschnittstellen wird jeweils ein anderer eindeutiger Speichermodulindex zugeordnet, wobei die Speichermodulindizes jeweils eine Zahl bzw. Nummerierung aufweisen, die, von der kleinsten Zahl an begonnen, einer aufsteigenden Reihenfolge von z.B. natürlichen Zahlen bzw. Binärzahlen entsprechen.

Ferner wird einer Speichermoduladressbusschnittstelle und einer Speichermoduldatenbusschnittstelle einer Speichermodulschnittstelle derselbe Speichermodulindex der jeweiligen Speichermodulschnittstelle zugeordnet.

Vorteil der Zuordnung eines festen Speichermodulindexes zu jeder Speichermodulschnittstelle ist, dass die Speicherverwaltungseinheit bzw. eine Kotrolleinheit der Speicherverwaltungseinheit mit dem Speichermodulindex direkt auf eine oder mehrere definierte Speichermodulschnittstellen sowie auf deren Speichermoduladressbusschnittstellen und deren Speichermoduldatenbusschnittstellen zugreifen kann.

Gemäß einer weiteren vorteilhaften Weiterbildung der Speicherverwaltungseinheit ist diese derart ausgebildet, um im Falle eines Speicherzugriffs oder im Falle eines Lesezugriffs eine an der Systemdatenbusschnittstelle anliegende Speicheradresse einzulesen. Ferner ist die Speicherverwaltungseinheit derart ausgebildet, um eine Anzahl Adressindizes und eine erste und eine zweite Speichermoduladresse zu erzeugen. Die Anzahl der Adressindizes entspricht dabei der Anzahl der Teildatenwörter des mit dem Schreibzugriff oder dem Lesezugriff zu speichernden oder zu lesenden Datenwortes.

Im Falle eines Datenwortes mit mehr als einem Teildatenwort werden also mehrere Adressindizes erzeugt. Jeder Adressindex weist also einen Nummernwert bzw. eine Zahl auf, wobei die Nummernwerte der Adressindizes einer Reihenfolge von z.B. benachbarten natürlichen Zahlen oder Binärzahlen entsprechen. Jeder Adressindex weist zudem eine seinem Nummernwert bzw. seiner Zahl entsprechende Wertigkeit auf. Geringe Wertigkeit bedeutet also eine vergleichsweise kleine Zahl und hohe Wertigkeit bedeutet eine vergleichsweise hohe Zahl.

Ferner ist die Speicherverwaltungseinheit derart ausgebildet, um den Adressindex mit der geringsten Wertigkeit sowie die erste Speichermoduladresse eindeutig aus der Speicheradresse zu ermitteln, wobei die zweite Speichermoduladresse der nächsthöheren an den Speichermoduladressbusschnittstellen ausgebbaren Adresse als der der ersten Speichermoduladresse entspricht.

Vorteil der Erzeugung von Adressindizes und Speichermoduladressen aus Speicheradressen ist, dass diese in der Speicherverwaltungseinheit jedem Teildatenwort zugeordnet werden können und somit eine eindeutige Zuordnung der Teildatenwörter für die weitere Verarbeitung in der Speicherverwaltungseinheit möglich ist.

Gemäß einer weiteren vorteilhaften Weiterbildung der Speicherwaltungseinheit ist diese derart ausgebildet, um jedem Teildatenwort einen bestimmten Adressindex zu zuordnen. Hierbei weist jedes Teildatenwort eine Bitwertigkeit auf, die durch die Position des Teildatenworts innerhalb des Datenworts vorgegeben ist. Das Teildatenwort, das die "least significant bits" (LSBs), also die niedrigstwertigen Bits, des Datenworts aufweist, entspricht hierbei dem Teildatenwort mit der geringsten Bitwertigkeit. Entsprechend haben Teildatenwörter mit jeweils höherwertigen Bits des Datenworts eine höhere Bitwertigkeit.

Die Speicherverwaltungseinheit ist nun derart ausgebildet, um dem oder den Teildatenwörtern entsprechend ihrer Bitwertigkeit den Adressindex zuzuordnen, der eine der jeweiligen Bitwertigkeiten entsprechende Wertigkeit aufweist. D.h., jedes Datenwort weist mindestens ein Teildatenwort auf, das wiederum die niedrigstwertigsten Bits des Datenwortes enthält. Dieses Teildatenwort entspricht dem Teildatenwort mit der geringsten Bitwertigkeit. Diesem Teildatenwort wird der Adressindex mit der geringsten Wertigkeit, der eindeutig aus der Speicheradresse ermittelt wird, zugeordnet.

Im Falle, dass das zu schreibende oder zu lesende Datenwort mehr als ein Teildatenwort aufweist, ist die Vorrichtung ferner dazu ausgebildet, um dem oder den Teilwörter mit jeweils höherer Bitwertigkeit als der niedrigsten Bitwertigkeit entsprechend ihrer Bitwertigkeit in aufsteigender Reihenfolge jeweils einen der aufsteigenden Reihenfolge der Wertigkeit entsprechenden Adressindex zu zuordnen. Es wird also z.B. dem Teildatenwort mit der niedrigsten Bitwertigkeit der kleinste Adressindex, also mit der geringsten Wertigkeit, zugeordnet, dem Teildatenwort mit der nächst höheren Bitwertigkeit wird der nächst größere Adressindex, also mit der nächst höheren Wertigkeit, zugeordnet, dem Teildatenwort mit der wiederum nächsthöheren Bitwertigkeit wird wiederum der nächstgrößere Adressindex zugeordnet usw., bis jedem Teildatenwort ein Adressindex zugeordnet ist.

Vorteil dieser Zuordnung eines bestimmten Adressindexes zu jedem Teildatenwort ist, dass jedes Teildatenwort entsprechend seiner Bitwertigkeit in der Speicherverwaltungseinheit, unabhängig vom Zusammenhang mit anderen Teildatenwörtern innerhalb des Datenwortes, verarbeitet werden kann, indem lediglich der zugeordnete Adressindex betrachtet wird.

Gemäß einer weiteren vorteilhaften Weiterbildung der Speicherverwaltungseinheit ist diese derart ausgebildet, um im Falle eines Schreibzugriffs den Dateninhalt des oder jedes der Teildatenwörter jeweils an einer definierten Speichermoduldatenbusschnittstelle auszugeben. Dazu wird zunächst der Speichermodulindex der jeweiligen Speichermodulschnittstelle ermittelt, indem der Rest einer Moduloberechnung mit dem Nummernwert des dem jeweiligen zu schreibenden Teildatenwort zugeordneten Adressindexes ermittelt wird. Für die Moduloberechnung wird eine Modulozahl herangezogen, die dem nächsthöheren Nummernwert des größten Speichermodulindexes entspricht. Es wird also zunächst jeweils der Nummernwert des Adressindexes, der einem Teildatenwort zugeordnet ist, einer Moduloberechnung unterzogen. Die Modulozahl für die Moduloberechnung entspricht dabei dem nächsthöheren Nummernwert des größten Speichermodulindexes.

Bei dieser Moduloberechnung ergibt sich ein Rest, der einem Nummernwert bzw. einer Zahl entspricht, der bzw. die kleiner als die Modulozahl ist. Diesem Rest wird im nächsten Schritt der Nummernwert des kleinsten Speichermodulindexes aufaddiert und daraus ein Ergebnis erhalten. Dieses Ergebnis entspricht dann dem Speichermodulindex der Speichermodulschnittstelle an dem der Dateninhalt genau des Teildatenworts ausgegeben wird, dessen zugeordneter Adressindex der Berechnung zum Erlangen des jeweiligen Ergebnisses zugrunde gelegt wird.

Ferner ist die Speicherverwaltungseinheit derart ausgebildet, um an der Speichermoduladressbusschnittstelle mit dem gleichen, bei der Moduloberechnung für den einem Teildatenwort zugeordneten Adressindexes berechneten Speichermodulindex im Falle eines Divisionsergebnisses von "Null" der jeweiligen Moduloberechnung die erste Speichermoduladresse und im Falle eines Divisionsergebnisses von "Eins" die zweite Speichermoduladresse auszugeben.

Vorteil der Moduloberechnung mit nachfolgender Addition im Falle eines Schreibzugriffs ist, dass ein Teildatenwort eindeutig einer definierten Speichermoduldatenbusschnittstelle zugeführt und an der entsprechenden Speichermoduladressbusschnittstelle eine eindeutige Speicheradresse ausgegeben wird. Dadurch wird jedes Teildatenwort im Falle eines Schreibzugriffs in eine eindeutige Speicherstelle in ein eindeutiges Speichermodul geschrieben, wobei diese Speicherstelle und dieses Speichermodul durch die der Speicherverwaltungseinheit zugeführte Speicheradresse und die daraus bestimmten Adressindizes und Speichermoduladressen vorbestimmt wird.

Gemäß einer weiteren vorteilhaften Weiterbildung der Speicherverwaltungseinheit ist diese derart ausgebildet, um im Falle eines Lesezugriffs den Dateninhalt des oder jedes der Teildatenwörter jeweils von einer definierten Speichermoduldatenbusschnittstelle einzulesen. Der Speichermodulindex der Speichermodulschnittstelle, von der ein Teildatenwort einzulesen ist, wird ermittelt, indem - wie im Falle eines Schreibzugriffs - der Rest einer Moduloberechnung mit dem Nummernwert des dem jeweiligen Teildatenwort zugeordneten Adressindexes ermittelt wird, wobei auch hier für die Moduloberechnung eine Modulozahl herangezogen wird, die dem nächsthöheren Nummernwert des größten Speichermodulindexes entspricht.

Dem Rest der jeweiligen Moduloberechnung wird im nächsten Schritt der Nummernwert des kleinsten Speichermodulindexes aufaddiert und daraus ein Ergebnis erhalten. Dieses Ergebnis entspricht dann dem Speichermodulindex der Speichermodulschnittstelle an dem der Dateninhalt genau des Teildatenworts eingelesen wird, dessen zugeordneter Adressindex der Berechnung zum Erlangen des jeweiligen Ergebnisses zugrunde gelegt wird.

Zudem ist die Speicherverwaltungseinheit derart ausgebildet, um an der Speichermoduladressbusschnittstelle des gleichen bei der Moduloberechnung berechneten Speichermodulindexes im Falle eines Divisionsergebnisses von "Null" der jeweiligen Moduloberechnung die erste Speichermoduladresse und im Falle eines Divisionsergebnisses von "Eins" die zweite Speichermoduladresse auszugeben.

Vorteil der Berechnung im Falle eines Lesezugriffs ist, dass ein Teildatenwort eindeutig von einer definierten Speichermoduldatenbusschnittstelle ausgelesen wird und an der entsprechenden Speichermoduladressbusschnittstelle eine eindeutige Speicheradresse ausgegeben wird. Dadurch wird jedes Teildatenwort im Falle eines Lesezugriffs aus einer eindeutigen Speicherstelle aus einem eindeutigen Speichermodul gelesen, wobei diese Speicherstelle und dieses Speichermodul durch die der Speicherverwaltungseinheit zugeführte Speicheradresse und die daraus bestimmten Adressindizes und Speichermoduladressen vorbestimmt wird.

Ferner betrifft die Erfindung ein Verfahren zum Verwalten von Speicherzugriffen mit einer Speicherverwaltungseinheit sowie ein System mit der Speicherverwaltungseinheit, einem Prozessor und mehreren Speichermodulen.

Weitere vorteilhafte Ausführungsformen ergeben sich aus den Unteransprüchen sowie aus den anhand der beigefügten Zeichnung näher erläuterten Ausführungsbeispielen. In der Zeichnung zeigen:
- Fig. 1: ein nach herkömmlichen Gesichtspunkten ausgelegtes System mit einem Prozessor und einem Speicher gemäß dem Stand der Technik;
- Fig. 2: ein erfindungsgemäßes Ausführungsbeispiel einer Speicherverwaltungseinheit, die mit einem System sowie mit Speichermodulen verbunden ist;
- Fig. 3: eine genauere Darstellung der Speicherverwaltungseinheit;
- Fig. 4: die Zuordnung von Adressindizes zu Teildatenwörtern und
- Fig. 5: die Zuordnung des Dateninhaltes eines Teildatenwortes zu einer Speichermoduldatenbusschnittstelle sowie die Zuordnung einer Speichermoduladresse zu einer Speichermoduladressbusschnittstelle.

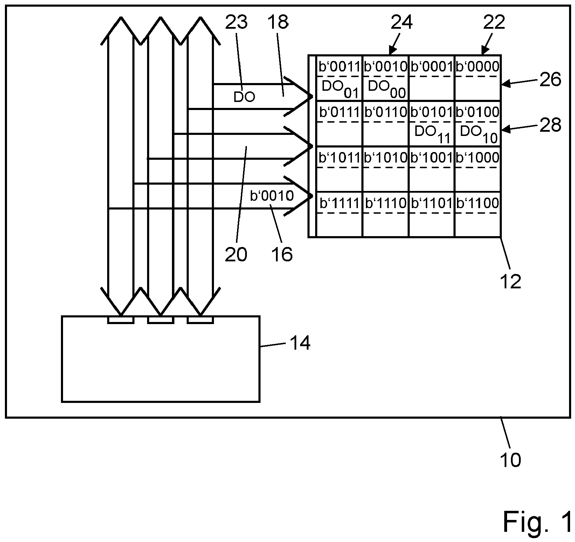

Fig. 1 zeigt ein System 10 mit einem Speichermodul 12 und einem Prozessor 14 gemäß dem Stand der Technik. Das Speichermodul 12 ist mit einem Systemadressbus 16, einem Systemdatenbus 18 sowie einem Systemsteuerbus 20 verbunden. Ferner ist auch der Prozessor 14 mit dem Systemadressbus 16, mit dem Systemdatenbus 18 und mit dem Systemsteuerbus 20 verbunden. Der Systemdatenbus 18 weist eine Bitbreite auf, die hier einer Breite von 4 Byte entspricht. Es können also Datenwörter mit bis zu 4 Byte über den Systemdatenbus 18 in das Speichermodul 12 geschrieben oder aus diesem gelesen werden.

Das Speichermodul 12 ist derart organisiert, dass wenn ein Datenwort der vollen Bitbreite, also mit vier Byte auf eine der Adressen (b'0000, b'0100, b'1000, b'1100) in der rechten Spalte 22 geschrieben oder von einer dieser Adressen gelesen wird, das Datenwort in einem Verarbeitungszyklus im Speichermodul 12 abgespeichert oder ausgelesen wird. Wird ein Datenwort der vollen Bitbreite, also mit 4 Byte, auf eine der Adressen der übrigen Spalten geschrieben, so sind zwei Verarbeitungszyklen nötig, um das zu schreibende oder zu lesende Datenwort im Speichermodul 12 abzuspeichern oder aus diesem auszulesen.

In Fig. 1 ist exemplarisch ein Datenwort 23 (D0) mit den Indizes 00, 01, 10 und 11 für jeweils ein Byte dargestellt. Dieses Datenwort 23 (D0) wird im Falle eines Schreibzugriffs in die rechts neben der am weitesten links liegenden Spalte 24 auf eine binäre Adresse b'0010 des Speichermoduls 12 geschrieben. In diesem Fall werden zwei Verarbeitungszyklen benötigt, um das Datenwort 23 zu schreiben. Im ersten Verarbeitungszyklus werden die ersten Bytes mit den Indizes 01 und 00 in der ersten Reihe 26 des Speichermoduls 12 geschrieben. Im zweiten Verarbeitungszyklus werden dann die zwei Byte des Datenworts 23 mit den Indizes 11 und 10 in die zweite Reihe 28 des Speichermoduls 12 geschrieben. Analog würden auch für einen Lesezugriff in diesem Fall zwei Verarbeitungszyklen benötigt werden.

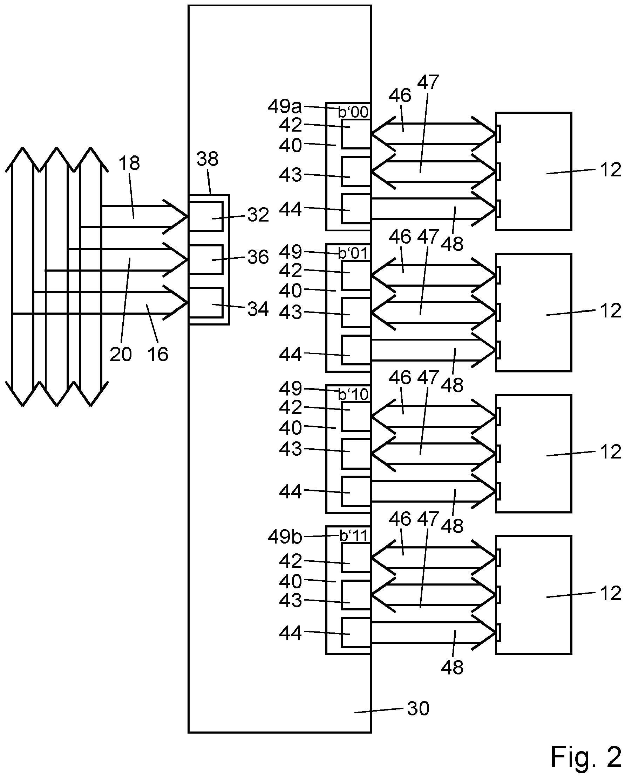

Fig. 2 zeigt ein Ausführungsbeispiel der erfindungsgemäßen Speicherverwaltungseinheit 30, die mit einem Systemadressbus 16, einem Systemdatenbus 18 und einem Systemsteuerbus 20 verbunden ist. Die Speicherverwaltungseinheit 30 ist mit einer Systemadressbusschnittstelle 32 mit dem Systemadressbus verbunden. Ferner ist die Speicherverwaltungseinheit 30 mit einer Systemdatenbusschnittstelle 34 mit dem Systemdatenbus 18 sowie mit einer Systemsteuerbusschnittstelle 36 mit dem Systemsteuerbus 20 verbunden. Eine Systemadressbusschnittstelle 32, eine Systemdatenbusschnittstelle 34 und eine Systemsteuerbusschnittstelle 36 bilden zusammen eine Systembusschnittstelle 38.

Ferner weist die Speicherverwaltungseinheit 30 in diesem Ausführungsbeispiel vier Speichermodulschnittstellen 40 auf. Jede der Speichermodulschnittstellen 40 weist eine Speichermoduldatenbusschnittstelle 42, eine Speichermodulsteuerbusschnittstelle 43 und eine Speichermoduladressbusschnittstelle 44 auf. Jede der Speichermoduldatenbusschnittstellen 42 ist über einen Speichermoduldatenbus 46 und jede Speichermodulsteuerbusschnittstelle 43 ist über einen Speichermodulsteuerbus 47 mit einem Speichermodul 12 verbunden. Ferner ist die Speicherverwaltungseinheit 30 über jede der Speichermoduladressbusschnittstellen 44 über einen Speichermoduladressbus 48 mit einem Speichermodul 12 verbunden. Eine Speicherverwaltungseinheit 30 ist nach dieser Ausgestaltung entsprechend für eine Datenbusbreite des Systemdatenbusses 18 von vier Teildatenwörtern ausgelegt. Es ist ferner eine Speicherverwaltungseinheit 30 denkbar, die mehr aber auch weniger Speichermodulschnittstellen 40 aufweist. Jeder Speichermodulschnittstelle 40 wird ein in einer aufsteigenden Reihenfolge nummerierte Speichermodulindex 49 zugeordnet. Dazu wird ein kleinster Speichermodulindex 49a definiert, der den kleinsten Nummernwert der Speichermodulindizes 49 aufweist. Ferner wird ein größter Speichermodulindex 49b definiert, der den größten Nummernwert der Speichermodulindizes 49 aufweist. In diesem Falle wird der obersten in Fig. 2 dargestellten Speichermodulschnittstelle 40 ein kleinster Speichermodulindex 49a, in diesem Fall b'00, zugeordnet. Der Speichermodulschnittstelle 40, die am weitesten unten in Fig. 2 dargestellt ist, wird ein größter Speichermodulindex 49b, in diesem Fall 3 bzw. b'11, zugeordnet. Der Speichermoduldatenbusschnittstelle 42, der Speichermodulsteuerbusschnittstelle 43 sowie der Speichermoduladressbusschnittelle 44 einer Speichermodulschnittstelle 40 wird jeweils derselbe Speichermodulindex 49 zugeordnet.

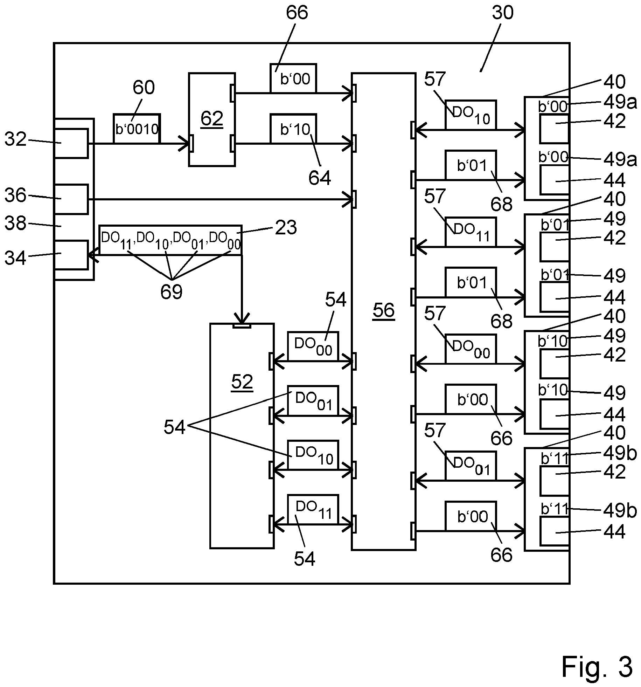

Fig. 3 zeigt eine detaillierte Darstellung eines Ausführungsbeispiels der Speicherverwaltungseinheit 30. Gleiche Bezugsziffern bezeichnen gleiche Merkmale. Es wird ein zu schreibendes oder zu lesendes Datenwort 23 dargestellt, das über die Systemdatenbusschnittstelle 34 von einem Systemdatenbus 16 im Falle eines Schreibzugriffs eingelesen oder im Falle eines Lesezugriffs von der Systemdatenbusschnittstelle 34 ausgegeben wird. Das Datenwort 23 wird in einer ersten Einheit 52 beim Schreibzugriff in seine einzelnen Teildatenwörtern 54 zerlegt oder bei einem Lesezugriff aus seinen einzelnen Teildatenwörtern 54 zusammengesetzt. Die Teildatenwörter 54 werden einer zweiten Einheit 56 beim Schreibzugriff zugeführt oder beim Lesezugriff von dieser ausgegeben. Ferner werden der zweiten Einheit 56 Steuersignale 58 zugeführt. Die Steuersignale 58 entsprechen den über die Systemsteuerbusschnittstelle 36 anliegenden Steuersignalen 58 eines Systemsteuerbusses 20. Mit den Steuersignalen wird der Speicherverwaltungseinheit 30 mitgeteilt, aus wie vielen Teildatenwörtern 54 ein Datenwort 23 besteht und ob dieses geschrieben oder gelesen werden soll. Ferner wir der Speicherverwaltungseinheit 30 über die Systemadressbusschnittstelle 32 eine Speicheradresse 60 zugeführt. Die Speicheradresse 60 wird dann einer Adressauswerteeinheit 62 zugeführt. Aus der Speicheradresse 60 wird ein Adressindex 64 mit einer geringsten Wertigkeit sowie eine erste Speichermoduladresse 66 eindeutig ermittelt und der zweiten Einheit 56 zugeführt.

In der zweiten Einheit 56 wird dann jedes Teildatenwort 54, abhängig von der ersten Speichermoduladresse 66 und dem Adressindex 64 mit der geringsten Wertigkeit, im Falle eines Schreibzugriffs jeweils einer definierten Speichermoduldatenbusschnittstelle 42 zugeführt oder von einer definierten Speichermoduldatenbusschnittstelle 42 eingelesen. Ferner führt die zweite Einheit jeder Speichermoduladressbusschnittstelle 44 eine erste Speichermoduladresse 66 oder eine in der zweiten Einheit gebildete zweite Speichermoduladresse 68 zu. Die Auswahl, ob einer Speichermoduladressbusschnittstelle 44 die erste Speichermoduladresse 66 oder die zweite Speichermoduladresse 68 zugeführt wird, erfolgt ebenfalls in Abhängigkeit von dem Adressindex 64 mit der geringsten Wertigkeit. Zur besseren Übersichtlichkeit zeigt Fig. 3 nicht die Speichermodulsteuerbusschnittstellen 43 sowie die Speichermodulsteuerbusse 47, wobei jedoch im Falle eines Zugriffs auf ein oder mehrere Speichermodule 12 ein sog. "Chip-Enable-Signal" über den jeweiligen Speichermodulsteuerbus 47 des jeweiligen Speichermoduls 12 gesetzt wird.

In Fig. 3 sind exemplarisch das Datenwort 23 (D0) sowie die Speicheradresse 60 dargestellt, die dem Datenwort 23 sowie der Speicheradresse 60 (b'0010) der Fig. 1 entsprechen. Das Datenwort 23 weist vier Bytes 69 auf. Die Bytes 69 sind in diesem Fall mit den Indizes 00, 01, 10 und 11 versehen. Jedes Byte 69 entspricht hier einem Teildatenwort 54, da das Byte 69 die kleinste Einheit darstellt, die mit dem Systemadressbus 16, also über die Systemadressbusschnittstelle 32 der Speicherveraltungseinheit, adressierbar ist.

Aus dem Datenwort 23 werden also vier Teildatenwörter 54 in der ersten Einheit 52 im Falle eines Schreibzugriffs durch Zerteilen des Datenworts 23 in seine Teildatenwörter 54 erhalten. Jedes dieser Teildatenwörter 54 wird dann in einem Verarbeitungszyklus an einer durch die Speicheradresse 60 festgelegten Speichermoduldatenbusschnittstelle 42 ausgegeben. Ein Verarbeitungszyklus ist hier z.B. ein Takt eines Systemtakts. Jedes Teildatenwort 54 des Datenworts 23 in ein separates Speichermodul 12 über die Speichermodulschnittstelle 34 im Falle eines Schreibzugriffs geschrieben werden kann, wird, unabhängig von der Bitbreite und der Speicheradresse 60 das gesamte Datenwort immer in einem Verarbeitungszyklus geschrieben. Zur Definition eines Verarbeitungszyklus kann wiederum das bekannte System 10 aus Fig. 1 herangezogen werden, bei dem im Falle der gleichen Speicheradresse 60 sowie des gleichen Datenworts 23 zwei Verarbeitungszyklen im Falle eines Schreibzugriffs oder im Falle eines Lesezugriffs benötigt werden.

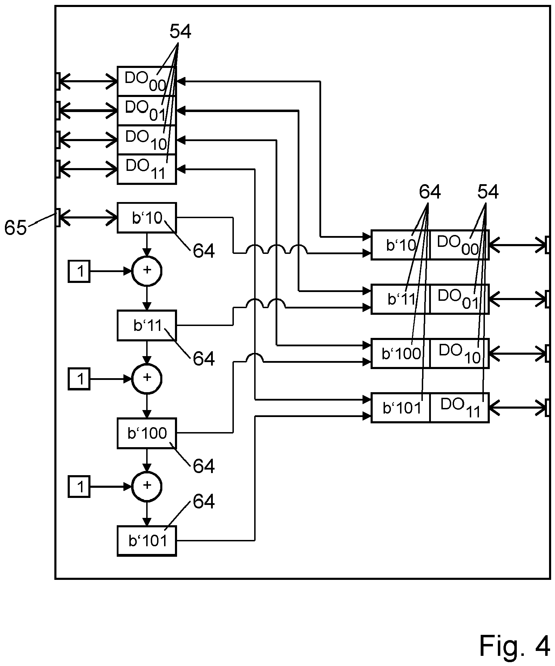

Fig. 4 zeigt einen Ausschnitt der zweiten Einheit 56, der jedem Teildatenwort 54 einen Adressindex 64 zuordnet. Dazu werden zunächst aus dem Adressindex 64 mit der geringsten Wertigkeit, der hier über die Schnittstelle 65 zugeführt wird, weitere Adressindizes 64 erzeugt. Es werden aus dem Adressindex 64 mit der geringsten Wertigkeit in einer aufsteigenden Reihenfolge nummerierte Adressindizes 64 gebildet, wobei die Anzahl der Adressindizes 64 der Anzahl der Teildatenwörter 54 entspricht. Die Adressindizes 64 werden erzeugt, indem zunächst dem Nummernwert des Adressindex 64 mit der geringsten Wertigkeit ein Wert 1 hinzuaddiert wird. Dadurch entsteht ein weiterer Adressindex 64 der eine höhere Wertigkeit als der Adressindex 64 mit der geringsten Wertigkeit aufweist. Durch weiteres Hinzuaddieren ein Wert 1 wird aus dem Adressindex 64 mit der höheren Wertigkeit als dem Adressindex 64 mit dem geringsten Wertigkeit wiederum ein Adressindex mit einer wiederum höheren Wertigkeit erzeugt. Dies setzt sich fort, bis die entsprechende Anzahl der Adressindizes 64 erzeugt worden ist, die der Anzahl der Teildatenwörter 54 entspricht.

Ferner weist jedes Datenwort 23 eine Bitwertigkeit auf, die durch die Position des Teildatenworts 54 im Datenwort 23 bestimmt ist. Das hier dargestellte Teildatenwort mit dem Index 00 entspricht dem Teildatenwort 54 des Datenworts 23 mit den niedrigstwertigsten Bits des Datenworts 23. Die Bitwertigkeit der dargestellten Datenwörter 54 ist durch einen aufsteigenden Index in Fig. 4 dargestellt.

Entsprechend ihrer Bitwertigkeit wird jedem Teildatenwort 54 ein Adressindex 64 zugeordnet. D. h. dem Adressindex 64 mit der geringsten Wertigkeit wird das Teildatenwort 54 mit der geringsten Bitwertigkeit zugeordnet. Dem Adressindex 64 mit der nächsthöheren Wertigkeit als der Wertigkeit des Adressindex 64 mit der geringsten Wertigkeit wird das Teildatenwort 54 mit einer höheren Bitwertigkeit als dem Teildatenwort 54 mit der geringsten Bitwertigkeit zugeordnet. Dies wird fortgesetzt, bis jedem Teildatenwort 54 ein Adressindex 64 zugeordnet ist.

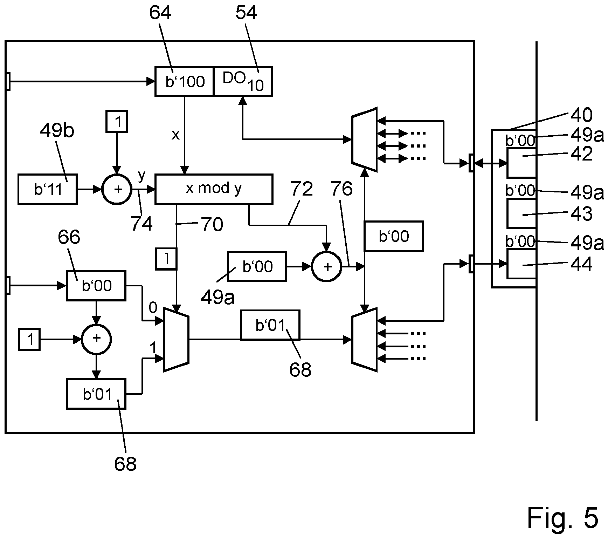

Fig. 5 zeigt einen zweiten Ausschnitt der zweiten Einheit 56, in dem abhängig von einem Adressindex 64, der einem Teildatenwort 54 zugeordnet ist, eine Speichermodulschnittstelle 40 gewählt wird, an dem das Teildatenwort 54 ausgegeben wird. Ferner wird aus der zugeführten ersten Speichermoduladresse 66 eine zweite Speichermoduladresse 68 ermittelt und abhängig vom Adressindex 64 eine Speichermodulschnittstelle 40 gewählt, an der entweder die erste Speichermoduladresse 66 oder die zweite Speichermoduladresse 68 ausgegeben wird. Dieser dargestellte Ausschnitt der zweiten Einheit 56 ist in der zweiten Einheit 56 in diesem Ausführungsbeispiel vier Mal vorhanden, wobei diese Anzahl der maximalen Anzahl der Teildatenwörter 54 eines Datenworts 23 entspricht. In diesem Fall wird der dargestellte Ausschnitt der zweiten Einheit 56 für das zugeführte Teildatenwort 54 mit dem Index 10 des Datenworts 23 (D0) und dem zugeordneten Adressindex 64 mit der Binärzahl b'100 aus Fig. 4 exemplarisch betrachtet.

Aus dem Adressindex 64 mit der Binärzahl b'100 die einem Nummerwert 4 entspricht, wird ein Divisionsergebnis 70 sowie ein Rest 72 erhalten, indem dieser Adressindex 64 einer Moduloberechnung unterzogen wird. Die Moduloberechnung wird mit einer Modulozahl 74 durchgeführt. Diese Modulozahl 74 entspricht dem nächst höheren Nummernwert als dem Nummernwert des größten Speichermodulindexes 49b. D.h. es wird der größte Speichermodulindex 49b, der hier einen Nummernwert 3 (b'11) aufweist, um 1 erhöht, also mit 1 addiert. Die sich daraus ergebende Zahl bzw. der sich daraus ergebende Nummernwert entspricht der für die Moduloberechnung zugrundegelegten Modulozahl 74, also hier dem Nummernwert 4.

Abhängig vom Divisionsergebnis 70 wird im Falle, dass das Divisionsergebnis 70 einen Nummerwert von 0 aufweist die erste Speichermoduladresse 66 an einer definierten Speichermodulschnittstelle 40 ausgegeben. Im Falle eines Divisionsergebnisses mit dem Nummernwert 1 wird die zweite Speichermoduladresse 68 an einer Speichermodulschnittstelle 40 ausgegeben. In diesem Fall entspricht das Divisionsergebnis einem Nummernwert 1. Dieser ergibt sich, da bei der Moduloberechnung in diesem Fall 4 Modulo 4 gerechnet wird.

Zu dem Rest 72 der Moduloberechnung wird der kleinste Speichermodulindex 49a hinzuaddiert und das Ergebnis der Addition aus Rest 72 und kleinstem Speichermodulindex 49a entscheidet an welcher Speichermodulschnittstelle 40 das Teildatenwort 54, dessen zugeordneter Adressindex 64 für die Berechnung des Ergebnisses 76 zugrunde gelegt wird sowie die erste Speichermoduladresse 66 oder die zweite Speichermoduladresse 68 ausgegeben werden. In diesem Fall beträgt das Ergebnis 76 der Addition aus Rest 72 der Moduloberechnung und kleinstem Speichermodulindex 49a dem Nummernwert 0 bzw. dem Binärwert b'00. Dieses Ergebnis 76 entspricht genau einem der Speichermodulindizes 49, in diesem Fall dem kleinsten Speichermodulindex 49a. D.h. dass das Teildatenwort 54, in diesem Fall mit dem Index 10, an der Speichermodulschnittstelle 40 mit dem Speichermodulindex 49, der dem Ergebnis 76 der Addition aus Rest 72 der Moduloberechnung und dem kleinsten Speichermodulindex 49a eines zugrundegelegten, dem Teildatenwort 54 zugeordneten Adressindex 64 und gleichzeitig einem Speichermodulindex 49 entspricht. In diesem Falle wird das Teildatenwort 54 mit dem Index 10 an der Speichermoduldatenbusschnittstelle 42 mit dem Speichermodulindex 49 mit dem Nummernwert 0 bzw. Binärwert b'00 ausgegeben. Ferner wird an der Speichermoduladressbusschnittstelle 44 mit demselben Speichermodulindex 49 die zweite Speichermoduladresse 68 ausgegeben und das "Chip-Enable-Signal" an der Speichermodulsteuerbusschnittstelle 43 mit demselben Speichermodulindex 49 gesetzt.

Gemäß einem weiteren Ausführungsbeispiel der erfindungsgemäßen Speicherverwaltungseinheit 40, dient diese zur schnellen Speicherung von langen, also aus mehreren Datenwörtern 23 bestehenden, Datenströmen sowie zu deren Auslesen aus mehreren Speichermodulen 12.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist daher nicht auf die beschriebenen bzw. beanspruchten Merkmalskombinationen beschränkt. Vielmehr sind alle Merkmalskombinationen als offenbart zu betrachten.

## Patentansprüche

1. Speicherverwaltungseinheit (30) mit einer Systembusschnittstelle (38) zu einem System (10), wobei die Speicherverwaltungseinheit (30) derart ausgebildet ist, um im Falle eines vom System (10) angeforderten Schreib- oder Lesezugriffs zu schreibende Datenwörter (23) von einer Systemdatenbusschnittstelle (34) der Systembusschnittstelle (38) einzulesen oder zu lesende Datenwörter (23) an der Systemdatenbusschnittstelle (34) der Systembusschnittstelle (38) auszugeben, wobei ein Datenwort (23) ein oder mehrere Teildatenwörter (54) aufweist und jedes Teildatenwort (54) eine Bitbreite aufweist, die der kleinsten mit einer Systemadressbusschnittstelle (32) der Systemdatenbusschnittstelle (38) adressierbaren Einheit von Bits, z.B. einem Byte, entspricht,
**dadurch gekennzeichnet, dass**
die Speicherverwaltungseinheit (30) derart ausgebildet ist, um in einem Verarbeitungszyklus, z.B. in einem Takt,
a) im Falle eines Schreibzugriffs ein zu schreibendes Datenwort (23), das mehr als ein Teildatenwort (54) aufweist, in seine einzelnen Teildatenwörter (54) aufzuteilen und jedes Teildatenwort (54) jeweils an einer anderen Speichermoduldatenbusschnittstelle (42) auszugeben,
b) im Falle eines Schreibzugriffs ein zu schreibendes Datenwort (23), das ein Teildatenwort (54) aufweist, an einer Speichermoduldatenbusschnittstelle (42) auszugeben,
c) im Falle eines Lesezugriffs ein zu lesendes Datenwort (23), das mehr als ein Teildatenwort (54) aufweist, aus seinen einzelnen Teildatenwörtern (54) zusammenzusetzen, wobei die Speicherverwaltungseinheit (30) derart ausgebildet ist, um jedes Teildatenwort (54) von einer anderen Speichermoduldatenbusschnittstelle (42) einzulesen und
d) im Falle eines Lesezugriffs ein zu lesendes Datenwort (23), das ein Teildatenwort (54) aufweist, von einer Speichermoduldatenbusschnittstelle (42) einzulesen.

2. Speicherverwaltungseinheit nach Anspruch 1,
**dadurch gekennzeichnet, dass**
die Speicherverwaltungseinheit Speichermodulschnittstellen (40) jeweils mit einer Speichermoduldatenbusschnittstelle (42) sowie einer Speichermoduladressbusschnittstelle (44) aufweist und die Speicherverwaltungseinheit (30) derart ausgebildet ist, um jeder Speichermodulschnittstelle (40) einen von, z.B. jeweils eine natürliche Zahl oder einen binären Wert aufweisenden, in einer aufsteigenden Reihenfolge nummerierten Speicherindizes (49) zuzuordnen, wobei ein kleinster Speichermodulindex (49a) den kleinsten Nummernwert und ein größter Speichermodulindex (49b) den größten Nummernwert der Speicherindizes (49) aufweist.

3. Speicherverwaltungseinheit nach Anspruch 1 oder 2,
**dadurch gekennzeichnet, dass**
die Speicherverwaltungseinheit (30) derart ausgebildet ist, um im Falle eines Schreib- oder Lesezugriffs eine Speicheradresse (60) einzulesen und eine Anzahl von, z.B. jeweils eine natürliche Zahl oder einen binären Wert aufweisenden, in einer aufsteigenden Reihenfolge nummerierten Adressindizes (64) und eine ersten Speichermoduloadresse (66) und eine zweiten Speichermoduladresse (68) zu erzeugen, wobei jeder Adressindex (64) eine seinem Nummernwert entsprechende Wertigkeit aufweist und die Anzahl der Adressindizes (64) der Anzahl der Teildatenwörter (54) des mit dem Schreib- oder Lesezugriffs zu schreibenden oder zu lesenden Datenwortes (23) entspricht und die Speicherverwaltungseinheit (30) derart ausgebildet ist, um den Adressindex (64) mit der geringsten Wertigkeit und die erste Speichermoduladresse (66) eindeutig aus der Speicheradresse (60) zu ermitteln, wobei die zweite Speichermoduladresse (68) der nächsthöheren an einem Speichermoduladressbus (44) ausgebbaren Adresse als der der ersten Speichermoduladresse (66) entspricht.

4. Speicherverwaltungseinheit nach Anspruch 3,
**dadurch gekennzeichnet, dass**
die Speicherverwaltungseinheit (30) derart ausgebildet ist, um jedem Teildatenwort (54) einen unterschiedlichen Adressindex (64) zuzuordnen, wobei das oder jedes der Teildatenwörter (54) eine Bitwertigkeit innerhalb des Datenworts (23) aufweist bzw. aufweisen und die Speicherverwaltungseinheit (30) derart ausgebildet ist, um dem oder den Teildatenwörtern (54) entsprechend ihrer Bitwertigkeit den Nummernwert des Adressindexes (64) mit der der Bitwertigkeit entsprechenden Wertigkeit zu zuordnen.

5. Speicherverwaltungseinheit nach Anspruch 4,
**dadurch gekennzeichnet, dass**
die Speicherverwaltungseinheit (30) derart ausgebildet ist, um im Falle eines Schreibzugriffs das oder jedes der Teildatenwörter (54) jeweils an einer Speichermoduldatenbusschnittstelle (42) mit einem zu bestimmenden Speichermodulindex (49) auszugeben, wobei die Speicherverwaltungseinheit (30) derart ausgebildet ist, um den Speichermodulindex (49) für das jeweilige Teildatenwort (54) zu bestimmen, indem der Nummernwert des dem jeweiligen Teildatenwort (54) zugeordneten Adressindexes (64) einer Moduloberechnung mit einer Modulozahl, die dem nächsthöheren Nummernwert des größten Speichermodulindexes (49b) entspricht, unterzogen, zu dem sich bei der Moduloberechnung ergebenden Rest (72) der Nummernwert des kleinsten Speichermodulindexes (49a) addiert und daraus ein Ergebnis (76) erhalten wird, und die Speicherverwaltungseinheit (30) derart ausgebildet ist, um an der Speichermoduladressbusschnittstelle (44) mit dem gleichen jeweilig bestimmten Speichermodulindex (49) im Falle eines Divisionsergebnisses (70) von Null bei der Moduloberechnung die erste Speichermoduladresse (66) und anderenfalls die zweite Speichermoduladresse (68) auszugeben.

6. Speicherverwaltungseinheit nach Anspruch 4 oder 5,
**dadurch gekennzeichnet, dass**
die Speicherverwaltungseinheit (30) derart ausgebildet ist, um im Falle eines Lesezugriffs das oder jedes der Teildatenwörter (54) jeweils an einer Speichermoduldatenbusschnittstelle (42) mit einem zu bestimmenden Speichermodulindex (49) einzulesen, wobei die Speicherverwaltungseinheit (30) derart ausgebildet ist, um den Speichermodulindex (49) für das jeweilige Teildatenwort (54) zu bestimmen, indem der Nummernwert des dem jeweiligen Teildatenwort (54) zugeordneten Adressindexes (64) einer Moduloberechnung mit einer Modulozahl, die dem nächsthöheren Nummernwert des größten Speichermodulindexes (49b) entspricht, unterzogen, zu dem sich bei der Moduloberechnung ergebenden Rest (72) der Nummernwert des kleinsten Speichermodulindexes (49a) addiert und daraus ein Ergebnis (76) erhalten wird, und die Speicherverwaltungseinheit (30) derart ausgebildet ist, um an der Speichermoduladressbusschnittstelle (44) mit dem gleichen jeweilig bestimmten Speichermodulindex (49) im Falle eines Divisionsergebnisses (70) von Null bei der Moduloberechnung die erste Speichermoduladresse (66) und anderenfalls die zweite Speichermoduladresse (68) auszugeben.

7. Verfahren zum Verwalten von Speicherzugriffen mit einer Speicherverwaltungseinheit (30) mit einer Systembusschnittstelle (38) zu einem System (10), wobei im Falle eines Schreib- oder Lesezugriffs zu schreibende Datenwörter (23) von einer Systemdatenbusschnittstelle (34) der Systembusschnittstelle (38) eingelesen oder zu lesende Datenwörter (23) an der Systemdatenbusschnittstelle (34) der Systembusschnittstelle (38) ausgegeben werden und ein Datenwort (23) ein oder mehrere Teildatenwörter (54) jeweils mit einem Dateninhalt (57) aufweist und jedes Teildatenwort (54) eine Bitbreite aufweist, die der kleinsten mit einer über die Systemadressbusschnittstelle (32) der Systembusschnittstelle (38) adressierbaren Einheit von Bits, z.B. einem Byte, entspricht,
**dadurch gekennzeichnet, dass**
in einem Verarbeitungszyklus, z.B. in einem Takt,
a) im Falle eines Schreibzugriffs ein zu schreibendes Datenwort (23), das mehr als ein Teildatenwort (54) aufweist, in seine einzelnen Teildatenwörter (54) aufgeteilt und jedes Teildatenwortes (54) jeweils an einer anderen Speichermoduldatenbusschnittstelle (42) ausgegeben wird,
b) im Falle eines Schreibzugriffs ein zu schreibendes Datenwort (23), das genau ein Teildatenwort (54) aufweist, an genau einer Speichermoduldatenbusschnittstelle (42) ausgegeben wird,
c) im Falle eines Lesezugriffs ein zu lesendes Datenwort (23), das mehr als ein Teildatenwort (54) aufweist, aus seinen einzelnen Teildatenwörtern (54) zusammengesetzt wird, wobei jedes Teildatenwort (54) von einer anderen Speichermoduldatenbusschnittstelle (42) eingelesen wird und
d) im Falle eines Lesezugriffs ein zu lesendes Datenwort (23), das ein Teildatenwort (54) aufweist, von einer Speichermoduldatenbusschnittstelle (42) eingelesen wird.

8. Verfahren nach Anspruch 7,
**dadurch gekennzeichnet, dass**
jeder Speichermodulschnittstelle (40) ein von, z.B. jeweils eine natürliche Zahl oder einen binären Wert aufweisenden, in einer aufsteigenden Reihenfolge nummerierter Speicherindizes (49) zugeordnet wird, wobei ein kleinster Speichermodulindex (49a) den kleinsten Nummernwert und ein Speichermodulindex (49b) den größten Nummernwert der Speichermodulindizes (49) aufweist.

9. Verfahren nach Anspruch 7 oder 8,
**dadurch gekennzeichnet, dass**
im Falle eines Schreib- oder Lesezugriffs eine zugeführte Speicheradresse (60) eingelesen wird und eine Anzahl von, z.B. jeweils eine natürliche Zahl oder einen binäre Wert aufweisenden, in einer aufsteigenden Reihenfolge nummerierten Adressindizes (64) und eine erste Speichermoduladresse (66) und eine zweite Speichermoduladresse (68) erzeugt werden, wobei jeder Adressindex (64) eine seinem Nummernwert entsprechende Wertigkeit aufweist und die Anzahl der Adressindizes (64) der Anzahl der Teildatenwörter (54) des mit dem Schreib- oder Lesezugriff zu schreibenden oder zu lesenden Datenwortes (23) entspricht und der Adressindex (64) mit der geringsten Wertigkeit und die erste Speichermoduladresse (66) eindeutig aus der Speicheradresse (60) ermittelt werden, wobei die zweite Speichermoduladresse (68) der nächsthöheren an einem Speichermoduladressbus ausgebbaren Adresse als der der ersten Speichermoduladresse (66) entspricht.

10. Verfahren nach Anspruch 9,
**dadurch gekennzeichnet, dass**
jedem Teildatenwort ein unterschiedlicher Adressindex (64) zugeordnet wird, wobei das oder jedes der Teildatenwörter (54) eine Bitwertigkeit innerhalb des Datenwortes (23) aufweist bzw. aufweisen und dem oder den Teildatenwörtern (54) entsprechend ihrer Bitwertigkeit der Nummernwert des Adressindexes (64) mit der der Bitwertigkeit entsprechenden Wertigkeit zugeordnet wird.

11. Verfahren nach Anspruch 10,
**dadurch gekennzeichnet, dass**
im Falle eines Schreibzugriffs das oder jedes der Teildatenwörter (54) jeweils an einer Speichermoduldatenbusschnittstelle (42) mit einem zu bestimmenden Speichermodulindex (49) ausgegeben wird, wobei der Speichermodulindex (49) für das jeweilige Teildatenwort (54) bestimmt wird, indem der Nummernwert des dem jeweiligen Teildatenwort (43) zugeordneten Adressindexes (64) einer Moduloberechnung mit einer Modulozahl, die dem nächsthöheren Nummernwert des größten Speichermodulindexes (49b) entspricht, unterzogen, zu dem sich bei der Moduloberechnung ergebenden Rest (72) der Nummernwert des kleinsten Speichermodulindexes (49a) addiert und daraus ein Ergebnis erhalten wird, das dem jeweiligen Speichermodulindex (49) entspricht und an der Speichermoduladressbusschnittstelle (44) mit dem gleichen jeweilig bestimmten Speichermodulindex (49) im Falle eines Divisionsergebnisses (70) von Null bei der Moduloberechnung die erste Speichermoduladresse (66) und anderenfalls die zweite Speichermoduladresse (68) ausgegeben wird.

12. Verfahren nach Anspruch 10 oder 11,
**dadurch gekennzeichnet, dass**
im Falle eines Lesezugriffs das oder jedes der Teildatenwörter (54) jeweils an einer Speichermoduldatenbusschnittstelle (42) mit einem zu bestimmenden Speichermodulindex (49) eingelesen wird, wobei der Speichermodulindex (49) für das jeweilige Teildatenwort (54) bestimmt wird, indem der Nummernwert des dem jeweiligen Teildatenwort (43) zugeordneten Adressindexes (64) einer Moduloberechnung mit einer Modulozahl, die dem nächst höheren Nummernwert des größten Speichermodulindexes (49b) entspricht, unterzogen, zu dem sich bei der Moduloberechnung ergebenden Rest (72) der Nummernwert des kleinsten Speichermodulindexes (49a) addiert und daraus ein Ergebnis erhalten wird, das dem jeweiligen Speichermodulindex (49) entspricht und an der Speichermoduladressbusschnittstelle (44) mit dem gleichen jeweilig bestimmten Speichermodulindex (49) im Falle eines Divisionsergebnisses (70) von Null bei der Moduloberechnung die erste Speichermoduladresse (66) und anderenfalls die zweite Speichermoduladresse (68) ausgegeben wird.

13. System mit einer Speicherverwaltungseinheit (30) nach einem der Ansprüche 1 bis 7 sowie einem Prozessor (14) und mehreren Speichermodulen (12).
